# EUROPÄISCHE PATENTSCHRIFT

(11) **EP 0 965 821 B1**
(45) Veröffentlichungstag und Bekanntmachung des Hinweises auf die Patenterteilung: **09.03.2005**
(21) Anmeldenummer: 99110443.1
(22) Anmeldetag: 29.05.1999
(51) Int. Cl.: G01D 11/30, F16D 1/10

(54) **Sensorbefestigung an einem Rotationsantrieb**
Sensor support on a rotary drive
Dispositif de support pour capteur à une prise en rotation

(30) Priorität: 17.06.1998 DE 29810800 U
(43) Veröffentlichungstag der Anmeldung: 22.12.1999
(73) Patentinhaber: ROTECH Antriebselemente GmbH, 76275 Ettlingen (DE)
(72) Erfinder: Peters, Heinz, 76275 Ettlingen (DE)
(74) Vertreter: Petersen, Frank, Dipl.-Ing.

(56) Entgegenhaltungen:
- EP-A- 0 270 768
- DE-A- 4 311 725
- US-A- 5 408 894

## Beschreibung

Die Erfindung betrifft eine Vorrichtung für den Anschluß eines Bauelementes an einen Stell- oder Schwenkantrieb zur Betätigung einer Armatur, der mit Bohrungen versehen ist zur Befestigung einer das Bauelement tragenden Konsole, die einen aus dem Stell- oder Schwenkantrieb herausragenden Wellenzapfen übergreift.

Armaturen der angesprochenen Art finden sich in verschiedensten Anlagen, wo mit verstellbaren Querschnittsverengungen ein Stoffstrom gedrosselt bzw. abgesperrt werden soll. Dabei wird diese Armatur, insbesondere in automatisch betriebenen Anlagen, durch einen Stellantrieb betätigt, der durch Stellkraft und Stellweg diese Querschnittsverengung bewirkt. Der Stellantrieb muß hierbei geregelt oder gesteuert werden.

Handelt es sich bei dem Stellantrieb um einen Schwenkantrieb, so weist er normalerweise einen freien Wellenzapfen auf, an dem Anbauten beliebiger Stellungsregler oder Rückmeldeeinrichtungen allgemein üblich sind. Diese Anbauten erfolgen häufig in Gehäusen, die sie sowohl vor Berührung als auch vor schädigenden Umwelteinflüssen schützen.

Diese Gehäuse sind dabei üblicherweise über Konsolen an dem Stellantrieb befestigt, wobei die Konsolen über vier Schrauben an dem Stellantrieb befestigt werden. Hierzu wurde eine entsprechende Norm entworfen (VDI/VDE 3845; EN12116), die die entsprechenden Abmessungen festlegt.

Grundsätzlich kann dabei das Gehäuse und die Konsole auch als ein integriertes Bauteil ausgeführt werden.

Es hat sich jetzt aber herausgestellt, daß bei einer Vielzahl von entsprechenden Armaturen und dementsprechend Stellantrieben beispielsweise in einer größeren Gesamtanlage der Zeitaufwand zur Montage der Signalgeräte mit ihren gegenenfalls integrierten Konsolen relativ groß ist aufgrund der Vielzahl der anzubringenden Schrauben, die die Konsolen halten.

Von daher stellt sich die Aufgabe der Erfindung, eine Vorrichtung wie oben beschrieben anzugeben, bei der eine schnellere Montage zu erreichen ist. Diese Montage soll dabei weiterhin eine ausreichende Betriebssicherheit gewährleisten.

Diese Aufgabe wird erfindungsgemäß dadurch gelöst, daß die den Wellenzapfen übergreifende Konsole in ihrer Position fixiert wird über ein am Wellenzapfen angreifendes Befestigungselement einerseits und wenigstens einen Nocken, der in eine der Bohrungen eingreift andererseits.

Über das am Wellenzapfen angreifende Befestigungselement wird dabei erreicht, daß die Konsole nicht in axialer Richtung des Wellenzapfen von diesem entfernt werden kann, während über den Nocken, der in eine der Bohrungen eingreift, eine Verdrehsicherung der Konsole erreicht wird. Damit kann eine gewünschte schnelle Befestigung der Fixierung erreicht werden, ohne daß die Konsole mit vier einzelnen Schrauben zeitaufwendig befestigt wird.

Bei dem Befestigungselement kann es sich grundsätzlich beispielsweise um eine Rastvorrichtung handeln.

Bevorzugterweise wird hierfür aber eine in den Wellenzapfen einschraubbare Schraube gewählt, die mit ihrem Kopf auf der Konsole aufliegt gegebenenfalls unter Zwischenschaltung einer Unterlegscheibe oder eines ähnlichen Zwischenbauteils und diese somit gegen ein Abfallen sichert. Vorteilhafterweise ist die Schraube dabei zentrisch in den Wellenzapfen eingeschraubt, da so bei dessen Verdrehungen keine Exzentrizitäten überwunden werden müssen.

Um die Konsole auf einfache Weise herstellen zu können, wird vorgeschlagen, sie als Blechstanz- und -biegeteil auszugestalten und den Nokken, mit dem sich die Konsole in einem der Bohrungen am Stellantriebsgehäuse abstützt, einstückig anzuformen.

Es ist dabei zu verstehen, daß eine Nocke für die gewünschte Drehabstützung ausreichend ist. Andererseits können aber auch mehrere Nocken vorgesehen sein, um eine positionsgenauere Einrichtung der Konsole zu erzielen.

Grundsätzlich ist es möglich, mit dem Befestigungselement neben der Konsole Anbauten mit dem Wellenzapfen zu verbinden. Hierbei wird beispielsweise an Kennelemente gedacht, mit denen die aktuelle Position des Stellantriebes über separate elektrische oder elektronische Aufnehmer zu ermitteln ist. Diese zusätzlichen Anbauten sind somit gegenüber der Konsole verschwenkbar, während sie am Wellenzapfen verdrehfest befestigt sind.

Bei einer bevorzugten Ausführungsform sind die Anbauten dabei unter der Konsole montiert und wirken dort mit dem an der Konsole befestigten Bauelement zu ihrer Positionsidentifizierung zusammen. Dies ist eine sehr kompakte Anordnung.

Sehr geschützt ist dementgegen die Version, bei der die Bauteile in einem auf der Konsole aufsitzenden Gehäuse angeordnet sind, das wiederum gegen Verdrehung an der Konsole abgestützt ist. In diesem Gehäuse können neben den Kennelementen wie oben beschrieben auch die entsprechenden Aufnehmer untergebracht werden. Die Verdrehabstützung zwischen Konsole und Gehäuse erfolgt dabei vorzugsweise über eine einfache Verzapfung. Das heißt entweder an dem Gehäuse oder aber an der Konsole ist ein entsprechender Zapfen vorgesehen, der in eine entsprechende Ausnehmung an der Konsole bzw. dem Gehäuse eingreift und somit eine Verdrehung zwischen diesen beiden Elementen verhindert.

Diese Verzapfung kann eine reine Steckverbindung sein, die gegebenenfalls aber auch rastbar auszuführen ist. Es ist aber auch möglich, die Verdrehabstützung von Gehäuse und Konsole über eine entsprechende Verschraubung zu erreichen oder zu sichern.

Weitere Vorteile und Merkmale der Erfindung ergeben sich aus der nachfolgenden Beschreibung von Ausführungsbeispielen. Dabei zeigt
- Figur 1: eine erfindungsgemäße Vorrichtung mit einem in einem Gehäuse auf einer Konsole zu befestigenden Bauelement in Explosionsdarstellung;
- Figur 2: eine erfindungsgemäße Vorrichtung mit unter einer Konsole zu montierenden Bauelement in Explosionsdarstellung.

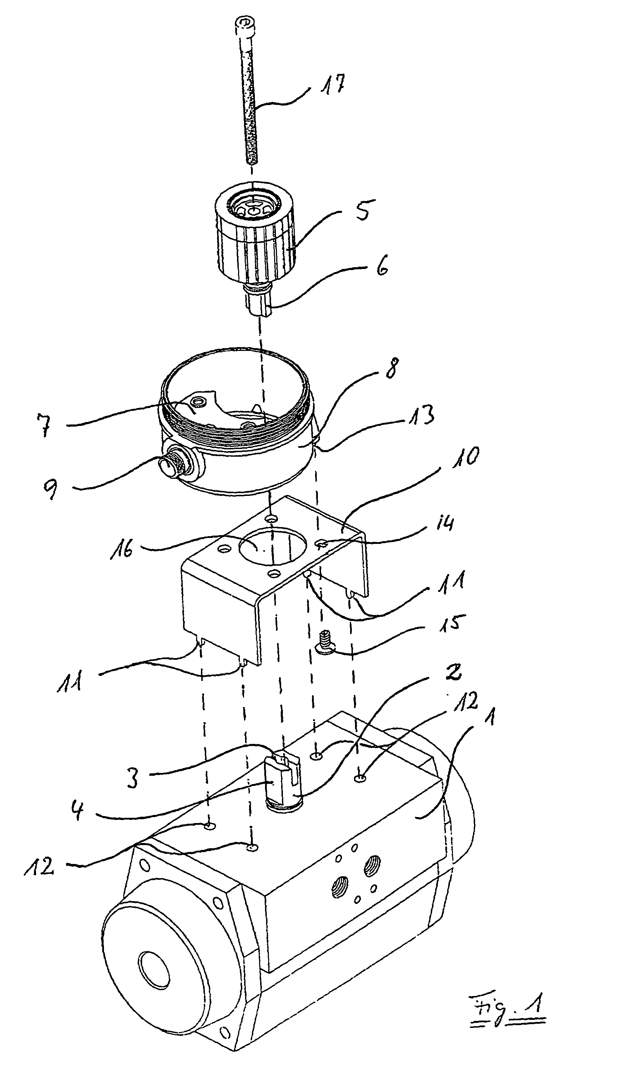

In der Figur 1 erkennt man einen Stell- bzw. Schwenkantrieb 1, an dessen einer Seitenfläche ein Wellenzapfen 2 herausragt, der mit einer Kennut 3 und abgeflachten Seitenflächen 4 versehen ist. Über diese Kennut 3 und die Seitenflächen 4 ist aus der Drehposition des Wellenzapfens 2 die Stellung des Stellgliedes im Stellantrieb ableitbar.

Dies erfolgt, indem ein Kennelement 5 über einen Mitnehmer 6 in die Kennut eingesteckt wird. An dem Kennelement 5 sind verschiedene Kennungen, beispielsweise in Form von eingebauten Bedämpfungselementen o. ä. für Sensoren und /oder Schaltern vorhanden, die in einem Aufnehmer 7 in Abhängigkeit von ihrer Position Signale erzeugen, die dann ausgewertet werden.

Der Aufnehmer 7 ist im in der Figur 1 dargestellten Beispiel in einem Gehäuse 8 untergebracht, wobei der Aufnehmer 7 über einen Kabelanschluß 9 an eine nicht dargestellte Auswerteeinheit angeschlossen wird.

Das Gehäuse 8 ist auf eine Konsole 10 zu setzen. Diese Konsole 10 ist als Blechstanz- und -biegeteil aus Metall hergestellt und weist eine im wesentlichen U-förmige Form auf. An den Enden der Schenkel dieses U befinden sich Nocken 11, die wie durch die gestrichelten Linien dargestellt, in normgemäß vorhandene Bohrungen 12 am Stellantrieb 1 eingreifen.

Indem diese Nocken 11 in die Bohrung 12 eingreifen, ist die Konsole 10 verdrehfest auf der Seitenfläche des Stellantriebes aufgesetzt. Dann wird das Gehäuse 8 auf die Konsole 10 aufgesetzt, wobei entsprechende Zapfen 13 an dem Gehäuse 8 in korrespondierende Ausnehmungen 14 an der Konsole 10 eingreifen. Dadurch ist auch eine verdrehfeste Verbindung zwischen Gehäuse 8 und Konsole 10 erreicht.

Grundsätzlich ist es auch möglich, die Konsole 10 und das Gehäuse 8 vor dem Aufsetzen auf das Stellantriebsgehäuse 1 miteinander zu verbinden und dann gegebenenfalls die Zapfen 13 durch eine selbstschneidende Schraube 15 gegen ein Rückziehen zu sichern.

Bei einer anderen, nicht dargestellten Ausführungsform ist das Gehäuse direkt mit integrierter Konsole als Kunststoffspritzteil einstückig hergestellt.

In das Gehäuse 8, das bis zum jetzt beschriebenen Zeitpunkt über die Konsole 10 lediglich lose auf den Stellantrieb 1 aufgesetzt ist, wird dann das Kennelement 5 eingesetzt, das mit seinem Mitnehmer 6 durch ein entsprechendes Loch im Boden des Gehäuses 8 und ein darunter liegendes Loch 16 in der Konsole 10 in die Kennut 3 des Wellenzapfens 2 eingreift. Abschließend wird dann der insofern nur zusammengesteckte Aufbau durch eine Schraube 17 gesichert, die axial durch das Kennelement 5 hindurchgeführt direkt in den Wellenzapfen 2 eingeschraubt wird und damit ein Abheben des Aufbaues abschließend verhindert.

Es ist somit möglich, den gesamten Anbau lediglich mit einem Befestigungselement, nämlich der Schraube 17 am Stellantrieb zu fixieren, ohne daß separate Schrauben vorzusehen wären, mit denen die Konsole 10 separat in die Bohrungen 12 am Stellantrieb 1 festzuschrauben wären.

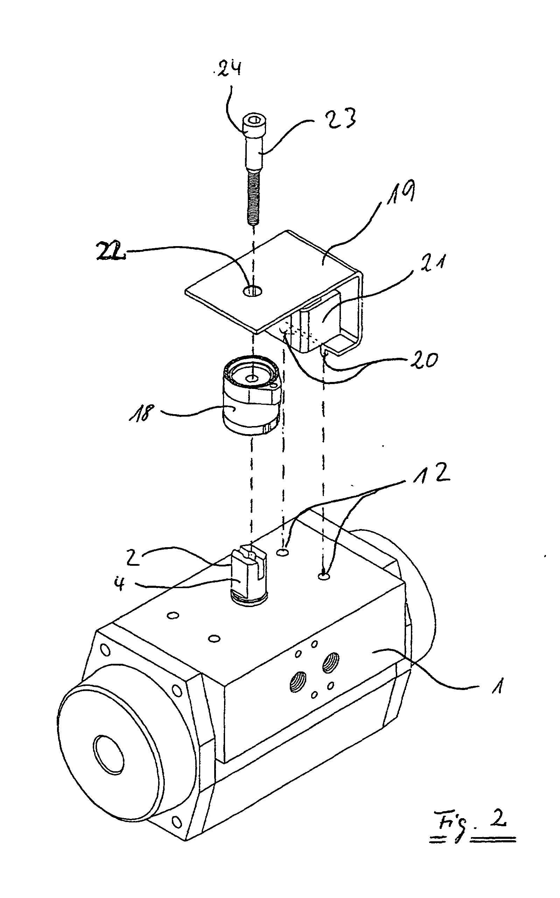

In der Figur 2 ist eine alternative Ausführungsform dargestellt. Man erkennt wieder den Stellantrieb 1 mit dem entsprechenden Wellenzapfen 2, der mit Seitenflächen 4 versehen ist. Mit diesen Seitenflächen korrespondieren entsprechende Flachseiten innen in einem Aufstecknocken 18. Dieser Aufstecknocken 18 wird auf den Wellenzapfen 2 aufgesetzt. Damit kommt er unter einen Befestigungsrahmen 19 zu liegen, der ebenfalls als Blechstanz- und -biegeteil aus Metall gefertigt ist.

Auch dieser Befestigungsrahmen 19 weist entsprechende Nocken 20 auf, mit denen er in entsprechende Bohrungen 12 am Stellantrieb 1 eingreift. In dem von dem Befestigungsrahmen 19 umgriffenen Bereich befindet sich ein Bauelement 21, das die Position des Aufstecknockens 18 erkennt und an eine nicht dargestellte Auswerteeinheit weitermeldet, die daraus die Stellung des Stellantriebes ableitet.

Der Befestigungsrahmen 19 weist an seiner Oberseite ein Durchgangsloch 22 auf, durch das eine Schraube 23 hindurchsteckbar und in den Wellenzapfen 2 einschraubbar ist, auf dem dabei der Aufstecknocken 18 sitzt. Durch den Kopf 24 der Schraube 23, gegen den der Befestigungsrahmen 19 anliegt, wird dann verhindert, daß der Befestigungsrahmen 19 vom Stellantrieb 1 abzuziehen ist, wobei gleichzeitig eine Verdrehung des Befestigungsrahmens 19 um oder mit dem Wellenzapfen 2 verhindert wird durch den bzw. die Nocken 20, die in die Bohrungen 12 am Stellantrieb 1 eingreifen.

Damit ist auch hier die Möglichkeit gegeben, mit lediglich einer Schraube zeitsparend Zusatzelemente am Stellantrieb zu befestigen.

## Patentansprüche

1. Vorrichtung für den Anschluß eines Bauelementes an den Stellantrieb (1) einer Armatur, der mit Bohrungen (12) versehen ist zur Befestigung einer Konsole (10, 19), die einen aus dem Stellantrieb (1) herausragenden Wellenzapfen (2) übergreift,
**dadurch gekennzeichnet,**
**daß** die Konsole (10, 19) in ihrer Position fixiert ist über ein am Wellenzapfen (2) angreifendes Befestigungselement (17, 23) und wenigstens einen Nocken (11, 20), der in eine der Bohrungen (12) eingreift.

2. Vorrichtung gemäß Anspruch 1,
**dadurch gekennzeichnet,**
**daß** das Befestigungselement ein an dem Wellenzapfen angreifendes Klemmelement ist.

3. Vorrichtung gemäß Anspruch 1,
**dadurch gekennzeichnet,**
**daß** das Befestigungselement eine in den Wellenzapfen (2) einschraubbare Schraube (17, 23) ist.

4. Vorrichtung gemäß Anspruch 3,
**dadurch gekennzeichnet,**
**daß** die Schraube (17, 23) zentrisch in den Wellenzapfen (2) eingeschraubt ist.

5. Vorrichtung gemäß Anspruch 1,
**dadurch gekennzeichnet,**
**daß** die Konsole (10, 19) ein Blechstanz- und -biegeteil ist mit wenigstens einem einstückig angeformten Nocken (11, 20).

6. Vorrichtung gemäß Anspruch 1,
**dadurch gekennzeichnet,**
**daß** mit dem Befestigungselement (17, 23) weitere Anbauten (5, 8; 18) mit dem Wellenzapfen (2) zu verbinden sind.

7. Vorrichtung gemäß Anspruch 6,
**dadurch gekennzeichnet,**
**daß** die Anbauten (5, 18) gegenüber der Konsole (10, 19) verschwenkbar am Wellenzapfen (2) verdrehfest befestigt sind.

8. Vorrichtung gemäß Anspruch 6,
**dadurch gekennzeichnet,**
**daß** die Anbauten (18) unter der Konsole (19) montiert sind und mit einem dort an der Konsole (19) befestigten Bauelement (21) zusammenwirken.

9. Vorrichtung gemäß Anspruch 1,
**dadurch gekennzeichnet,**
**daß** Bauelemente in einem auf der Konsole (10) aufsitzenden Gehäuse (8) angeordnet sind, das gegen Verdrehung an der Konsole (10) abgestützt ist.

10. Vorrichtung gemäß Anspruch 9,
**dadurch gekennzeichnet,**
**daß** Gehäuse und Konsole einstückig miteinander sind.

11. Vorrichtung gemäß Anspruch 9,
**dadurch gekennzeichnet,**
**daß** die Verdrehabstützung durch eine Verzapfung (13, 14) von Gehäuse (8) und Konsole (10) erfolgt.

## Claims

1. Device for connecting a component to the actuator (1) of a fitting which is provided with holes (12) for fixing a bracket (10, 19) which engages over a shaft journal (2) projecting from the actuator (1), **characterised in that** the bracket (10, 19) is fixed in its position by way of a fixing element (17, 23) which acts on the shaft journal (2) and at least one projection (11, 20) which engages in one of the holes (12).

2. Device as claimed in Claim 1, **characterised in that** the fixing element is a clamping element which acts on the shaft journal.

3. Device as claimed in Claim 1, **characterised in that** the fixing element is a screw (17, 23) which can be screwed into the shaft journal (2).

4. Device as claimed in Claim 3, **characterised in that** the screw (17, 23) is screwed centrally into the shaft journal (2).

5. Device as claimed in Claim 1, **characterised in that** the bracket (10, 19) is a part stamped and bent out of sheet metal with at least one projection (11, 20) formed integrally thereon.

6. Device as claimed in Claim 1, **characterised in that** further mountings (5, 8; 18) are to be connected to the shaft journal (2) by the fixing element (17, 23).

7. Device as claimed in Claim 6, **characterised in that** the mountings (5, 18) are fixed pivotably on the shaft journal (2) so as to be fixed against twisting relative to the bracket (10, 19).

8. Device as claimed in Claim 6, **characterised in that** the mountings (18) are mounted below the bracket (19) and co-operate with a component (21) fixed there on the bracket (19).

9. Device as claimed in Claim 1, **characterised in that** components are disposed in a housing (8) which is seated on the bracket (10) and is supported against twisting on the bracket (10).

10. Device as claimed in Claim 9, **characterised in that** the housing and the bracket are integral with one another.

11. Device as claimed in Claim 9, **characterised in that** the support against twisting is provided by pins (13) on the housing (8) engaging in holes (14) in the bracket (10).

## Revendications

1. Dispositif pour raccorder un élément au servomoteur (1) d'une installation, qui est muni de perçages (12) pour la fixation d'une console (10, 19) qui recouvre un tourillon d'arbre (2) qui dépasse du servomoteur (1),
**caractérisé par le fait**
**que** la console (10, 19) est fixée dans sa position par un élément de fixation (17, 23) en prise sur le tourillon d'arbre (2) et au moins un ergot (11, 20) qui s'engage dans un des perçages (12).

2. Dispositif selon la revendication 1,
**caractérisé par le fait**
**que** l'élément de fixation est un élément de serrage en prise sur le tourillon d'arbre.

3. Dispositif selon la revendication 1,
**caractérisé par le fait**
**que** l'élément de fixation est une vis (17, 23) pouvant être vissée dans le tourillon d'arbre (2).

4. Dispositif selon la revendication 3,
**caractérisé par le fait**
**que** la vis (17, 23) est vissée en position centrale dans le tourillon d'arbre (2).

5. Dispositif selon la revendication 1,
**caractérisé par le fait**
**que** la console (10, 19) est une pièce en tôle découpée et pliée avec au moins un ergot (11, 20) formant une seule pièce avec elle.

6. Dispositif selon la revendication 1,
**caractérisé par le fait**
**que** l'élément de fixation (17, 23) permet de raccorder d'autres pièces rapportées (5, 8 ; 18) au tourillon d'arbre (2).

7. Dispositif selon la revendication 6,
**caractérisé par le fait**
**que** les pièces rapportées (5, 18) sont fixées sur le tourillon d'arbre (2) de manière solidaire en rotation avec celui-ci et pivotante par rapport à la console (10, 19).

8. Dispositif selon la revendication 6,
**caractérisé par le fait**
**que** les pièces rapportées (18) sont montées sous la console (19) et coopèrent avec un élément (21) fixé à cet endroit sur la console (19).

9. Dispositif selon la revendication 1,
**caractérisé par le fait**
**que** des éléments sont disposés dans un boîtier (8) monté sur la console (10) qui est calé contre la rotation sur la console (10).

10. Dispositif selon la revendication 9,
**caractérisé par le fait**
**que** boîtier et console forment une seule pièce.

11. Dispositif selon la revendication 9,
**caractérisé par le fait**
**que** le calage contre la rotation est réalisé par un assemblage à tenon et à mortaise (13, 14) du boîtier (8) et de la console (10).
